# EUROPEAN PATENT SPECIFICATION

(11) **EP 3 596 521 B1**
(45) Date of publication and mention of the grant of the patent: **09.08.2023**
(21) Application number: 17723246.9
(22) Date of filing: 17.03.2017
(51) Int. Cl.: G02B 6/44, H01B 9/00

(54) **HYBRID CABLE WITH A TUBE FOR RECEIVING OPTICAL FIBER OR CABLE**
HYBRIDKABEL MIT EINEM ROHR ZUR AUFNAHME EINER OPTISCHEN FASER ODER EINES KABEL
CÂBLE HYBRIDE DOTÉ D'UN TUBE DESTINÉ À RECEVOIR UNE FIBRE OPTIQUE OU UN CÂBLE

(43) Date of publication of application: 22.01.2020
(73) Proprietor: Prakab Prazská Kabelovna, S.R.O., 102 00 Praha 10 Hostivar (CZ)
(72) Inventor: PELIKÁN, Lukás, 789 01 Zábreh (CZ); TREJBAL, Jakub, 543 74 (CZ); DVORAK, Michal, 149 00 Praha 4 (CZ)
(74) Representative: Danek, Vilém
(86) International application number: PCT/CZ2017/000016
(87) International publication number: WO 2018/166543

(56) References cited:
- WO-A1-90/02286
- CN-A- 106 128 629
- CN-U- 203 910 335
- CN-U- 204 614 504
- DE-A1- 4 334 732
- JP-A- 2008 204 933
- JP-A- 2012 059 430
- JP-U- S61 132 621

## Description

### Technical Field

Present invention relates to a hybrid cable which includes at least one conductive element in the form of a cable or a conductor, according to claim 1.

### Background Art

Currently are known primarily these types of hybrid cables:
- metallic-metallic cable, which under a common sheath contains a power cable of rated voltage 450 / 750V and a communication cable for transmitting an electric signal;
- metallic-optical cable, which under a common sheat contains communication cable for transmitting electrical signals and fiber optic cable.

The prior art relating to hybrid cables is known e.g. from patent publication CH 6665047, which relates to a high voltage cable comprising three cores, between which is disposed a tube, in which may be placed an optical fiber. A fundamental shortcoming is small area of contact between the tube and its surrounding cores, which is given by the circular shape of cores and tube. Due to this features, the tube may be trapped between the two or more cores outside the central axis of the cable, which can make the installation of the optical cable or fiber into the tube impossible as the tube may be deformed.

Another document describing the prior art is e.g. DE19544898A1, which relates to a low voltage power cable for supplying technical devices or machines, which is equipped with an outer shell protecting the power cable and cores for current conduction. Between the outer shell and cores a free space is located. In free space at least one additional element LWL is housed. The disadvantage is the inadequate storing of LWL element in the free space of the cable.

Also known is document DE19631820C1, which describes hybrid electric cable having at least one optical cable, embedded in the core for the electrical current and sheated, wherein the core cross section, forming the core of the sector, a space into which are inserted optical cords, is created. The invention consists in the fact that a space for a protective tubes of optic cable is created by a viewport (on the edge of at least one core), which differs significantly from the present invention which has a configuration of strictly centrally positioned polymeric tube.

It is also known DE29505766U1 document, which relates to a power cable with multiple core conductors and one optical core with a filling between cores and a common sheath. The optical core is led concentrically adjacent to the cable sheath. The disadvantage is the lack of protection of the optical core against any pressure from outside.

The document US2013294735A1 relates to a hybrid cable whose elements all mounted inside the cable have a circular cross section and, unlike in the present invention, there is a considerable amount of free space between the cores or cables. This arrangement is not suitable due to inadequate protection of optical fibers.

The document CN203910335U relates to a shaped conductor fiber composite low-voltage power cable which comprises an external protective layer. A metal tape armor layer is sleeved in the external protective layer. The internal surface of the metal tape armor layer is provided with an internal lining layer which is closely clung to the internal wall of the metal tape armor layer. Conductor cores wrapped by an insulating layer are sleeved in the internal part of the internal lining layer. This document does not comprise a tube made of polymeric material, which is further not provided with longitudinal grooves for reducing the friction surface and easier positioning or removal of the optical fiber or cable. Furthermore, the tube is not surrounded by the conductive element such that the walls of the conductive element formed by insulation and surrounding its wire abut the outer surface of the tube, so that at least half part of the outer space of the tube is in contact with the conductive element. The document WO90/02286A1 dislcoses a conduit liner for housing a series of fiber optics elements.

Generally, when installing tubes into the hybrid cable, the need to install two types of cables and the associated demands on installation time, reducing space requirements for the installation of one instead of two cables and the financial costs involved, is eliminated. The advantage of this solution lies in the possibility of subsequent blowing - installation of fiber optic cable according to local needs. In the event of damage to the fiber optic cable or fiber or future demand for a different type of cable, or multifiber optic cable, the current cable is blown from a polymer tube and then new fiber optic cable is installed. All this can be done without removing the hybrid cable itself even under full operation of metallic cable.

The disadvantage of the prior art is minimal contact surface of the tube with the remaining cores of the hybrid cable. Each cable is in contact with the tube usually only in one point on their circuit, or, possibly with non-circular cross-section of the cable the contact sufrace on the sheat of the cable and tube is very small. The invention aims to solve the technical problem, which relates to the mutual arrangement of individual wires or cables, and other elements within the hybrid cable. In particular, it deals with the arrangement of the tube formed from polymeric material within the hybrid cable so as to remain always unobstructed for subsequent storage of, especially by blowing, an optical fiber into or out of the tube or otherwise made removal, while maintaining the smallest possible diameter of the hybrid cable.

### Disclosure of the Invention

The invention is set out in the appended set of claims.

Principle of invention lies in a specific configuration of used polymeric tube as a structural member for the subsequent blowing the optical fiber or optical cable into a cable, its storing, respectively blowing the optical fiber or optical cable from a cable, which has to or may form part of the hybrid cable. The hybrid cable comprises at least one conductive element in the form of a cable or conductor, e.g., at least one metallic power cable for electric power transmission for a rated voltage to 3.6 / 6 kV and further comprises at least one polymeric tube for subsequent installation of optical fiber or optical cable. Polymer tube for the subsequent installation of fiber optic cable passes through the center of the cable core so that it is surrounded by the remaining conductive elements.

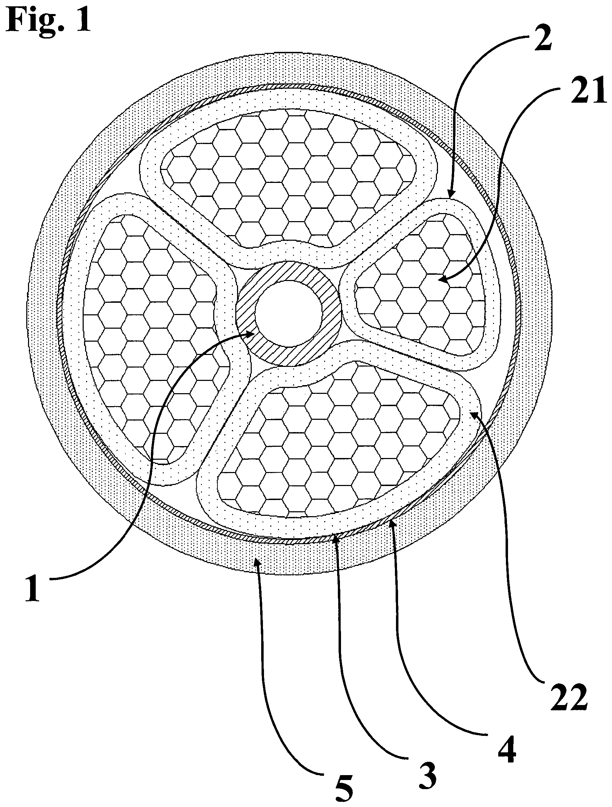

The tube is arranged or sandwiched, respectively, in the center of the hybrid cable and surrounded by a conductive elements disposed within the hybrid cable so that its walls adhere to the outer surface of the tube so that a substantial, but at least more than half, part of the surface of the tube is in contact with the remaining conductive elements. This arrangement is shown in Fig. 1. Preferably the hybrid cable comprises four conductive elements disposed outside the tube.

The tube has an internal and external circular cross-section, which is most advantageous in terms of minimizing losses in the interior of the hybrid cable and the throughput of the optical fiber or optical cable within the tube. The inner cross section of the tube comprises a longitudinal grooves for reducing the friction surfaces, and facilitate the placement or removal of the optical fiber or optical cable.

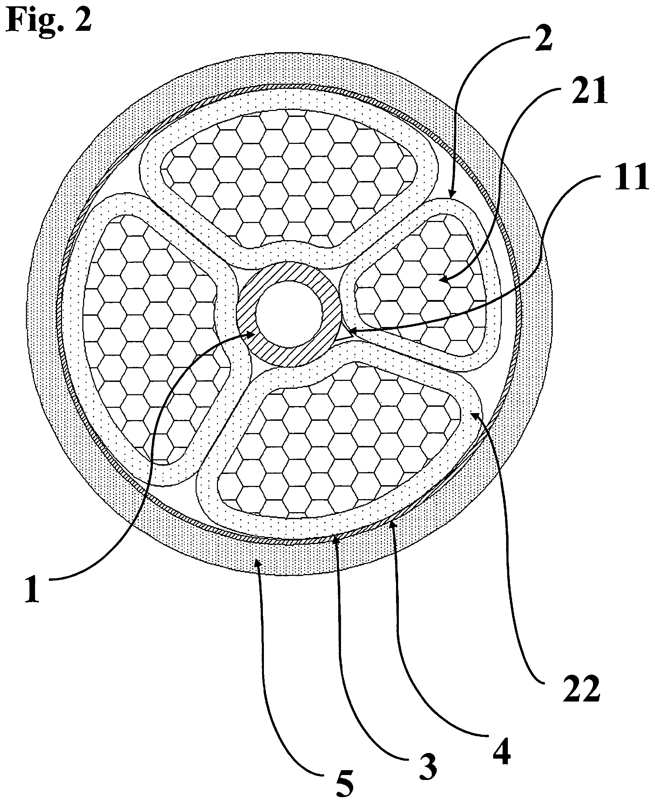

To stabilize the tube in the center of the hybrid cable, the outer wall of the tube is provided with at least one longitudinally extending projection, as shown in Fig. 2, whose number and placement depends on the number and size of the remaining conductive elements stored in the hybrid cable. The number of projections may be at most equal to the number of conductive elements or, respectively, to the number of gaps between conducting elements formed in contact with the tube. The stabilizing projection or projections fill small gaps between the conductive elements where they come into contact with the outer surface of the tube.

According to the invention, the conductive elements surrounding the tube have jointly an annular shape, thus ensuring the position of the tube within the annulus

The tubes are joined into single unit and rigidly connected with their outer walls, said unit being mounted again in the center of the hybrid cable.

Metallic cables of hybrid cable are made up of cores consisting of conductive aluminum or copper wire insulated by continuous insulation. The cable core of the hybrid cable is preferably coated with a covering element in the form of tape or continuous extruded mixture and has a common outer sheath of the hybrid cable.

### Terms:

*Hybrid cable* - a cable that, under one common sheat, consists of metallic cables (power, communication) or optical cables or a combination of individual types;
*Metallic cable* - power or communication cable, whose conductive wire is most often made of electro-copper, aluminum, silver; *Power cable* - used to transfer electric energy;
*Communication cable* - low-voltage cable for transmission of electrical signal (telephone, coax, data cable);
*Optical cable* - consists of optical fibers, which transmit light signals in the direction of its longitudinal axis;
*Conductive element* - it may be a core consisting of a conductive wire or a power, possibly a communication or fiber optic cable;
*Tube* - used to blow the optical cable in or out. Preferably, it is formed of a polymeric material. It is most often made from a polyolefin based polymer. The inner wall of the tube is preferably longitudinally grooved so that, when blowing the optical cable in or out, respectively, the friction between the cable itself and the tube is reduced;
*Blowing the optical cable in* - a process that involves the introduction of an optical cable and a pushing device into a tube using compressed air;
*Blowing the optical cable out* - a process by which the optical cable is removed by compressed air from the tube.

### Disclosure of Figures

Fig. 1 shows a cross section through a hybrid cable with a tube for the subsequent installation of an optical cable passing through the center of the core of the hybrid cable;
Fig. 2 shows a cross-section through a hybrid cable with a polymer tube for the subsequent installation of an optical cable, the tube having a projection;

### Example of Embodiment

Hybrid cable according to Fig. 1 comprising four conductive elements 2 formed by twisting of the conductors consisting of a conductive aluminum wire 21 insulated by a continuous insulation 22, which are housed in the core 1 of the hybrid cable together with the tube 1 for the subsequent installation of the optical cable, wherein the tube 1 is arranged in the center of a hybrid cable and surrounded by conductive elements 2 embedded within the hybrid cable so that their walls made of insulation 22 abut the outer surface of the tube 1 such that at least the half-part of the outer surface of the tube 1 is in contact with the conductive elements 2. The core 3 of the hybrid cable is wrapped with a cover element 4 in the form of tapes, and the hybrid cable has an outer sheat 5.

The tube 1 made of polymeric material, has internal and external circular cross-section, the inner cross-section of the tube 1 comprising longitudinal grooves for reducing the friction surface and for easier positioning or removal of the optical fiber or cable.

In order to stabilize the tube 1 in the center of the hybrid cable, the outer wall of the tube 1 is provided with at least one longitudinally extending projection 11, the number of projections 11 being at most equal to the number of conductive elements 2 or to the number of gaps which these conducting elements 2 create at the point of contact with the tube 1. This projection 11 fills the small gaps between the conductive elements 2 at the point of contact of the conductive elements 2 with the outer surface of the tube 1.

The cables 2 surrounding the polymer tube 1 together as a whole have the shape of an annulus, thereby securing the position of the polymer tube 1 having circular cross-section within this annulus, the entire surface of the outer wall of the polymer tube 1 abutting the walls of all conductive elements 2 or, respectively, of the insulation 22 over the entire length of the hybrid cable.

The tubes 1 are all forming one unit and are rigidly connected to one another by the outer walls thereof, the unit being also placed in the center of the hybrid cable.

### Industrial Utilization

The invention is industrially utilizable in the electrotechnical industry.

### List of reference marks

- 1: tube
- 11: projection
- 2: conductive element
- 21: wire
- 22: insulation
- 3: cable core
- 4: cover element
- 5: outer sheat

## Claims

1. A hybrid cable comprising at least one conductive element (2) in the form of a cable or a conductor, wherein the conductive element (2) is a metallic power cable for transferring electric power for a rated voltage of up to 3.6 / 6 kV, wherein it further comprises at least one tube (1) for the subsequent installation of an optical fiber or optical cable, wherein the tube (1) or the assembly of two or more tubes (1) is housed in the center of the hybrid cable inside the cable core (3), the cable core (3) is coated with a covering element (4) in the form of a tape or a continuous extruded mixture and covered by the outer sheath (5), **characterized in that** at least one tube (1) made of a polymeric material that has internal and external circular cross-section, the inner cross-section of the polymer tube (1) comprising longitudinal grooves for reducing the friction surface and easier positioning or removal of the optical fiber or cable, each tube (1) being surrounded by the conductive element (2) placed within the hybrid cable, such that the walls of the conductive element (2) formed by insulation (22) and surrounding its wire (21) abut the outer surface of the tube (1) or tube (1) or tube (1) assembly, so that at least the half-part of the outer surface of the tube (1) or tube (1) assembly is in contact with the conductive element (2), the outer wall of the tube (1) is provided with at least one longitudinally extending projection (11) for filling the gap between the individual conductive elements (2) at the point of contact of the conductive elements (2) with the outer surface of the tube (1),
wherein the conductive elements (2) surrounding single tube (1) have all together as a one unit the shape of an annulus in order to ensure the position of the tube (1) having circular cross-section within this ring, wherein the entire surface of the outer wall of the tube (1) abuts in the entire length of the hybrid cable to the outer walls of all conductive elements (2), the walls being provided with an insulation (22).

2. Use of a hybrid cable according to claim 1 for subsequent storage of the optical fiber or cable into the tube and/or for subsequent replacement or removal of the optical fiber or cable from the hybrid cable.

## Patentansprüche

1. Hybridkabel mit mindestens einem leitfähigen Element (2) in Form eines Kabels oder eines Leiters, wobei das leitfähige Element (2) ein metallisches Energiekabel zur Übertragung von elektrischer Energie für eine Nennspannung von bis zu 3,6/6 kV ist, wobei es ferner mindestens ein Rohr (1) für die nachfolgende Installation einer optischen Faser oder eines optischen Kabels umfasst, wobei das Rohr (1) oder die Anordnung von zwei oder mehr Rohren (1) in der Mitte des Hybridkabels innerhalb der Kabelseele (3) untergebracht ist, wobei die Kabelseele (3) mit einem Umhüllungselement (4) in Form eines Bandes oder eines kontinuierlichen extrudierten Gemisches beschichtet und von der äußeren Umhüllung (5) bedeckt ist, **dadurch gekennzeichnet, dass** mindestens ein Rohr (1) aus einem polymeren Material hergestellt ist, das einen inneren und äußeren kreisförmigen Querschnitt aufweist, der innere Querschnitt des Polymerrohrs (1) Längsrillen zur Verringerung der Reibungsfläche und zur Erleichterung der Positionierung oder der Entnahme der optischen Faser oder des Kabels aufweist, wobei jedes Rohr (1) von dem leitfähigen Element (2) umgeben ist, das im Inneren des Hybridkabels angeordnet ist, so dass die Wände des leitfähigen Elements (2), die durch die Isolierung (22) gebildet werden und seinen Draht (21) umgeben, an der Außenfläche des Rohrs (1) oder des Rohrs (1) oder der Rohranordnung (1) anliegen, so dass mindestens die Hälfte der Außenfläche des Rohrs (1) oder der Rohranordnung (1) in Kontakt mit dem leitfähigen Element (2) ist, die Außenwand des Rohrs (1) mit mindestens einem sich in Längsrichtung erstreckenden Vorsprung (11) versehen ist, um den Spalt zwischen den einzelnen leitfähigen Elementen (2) an der Stelle des Kontakts der leitfähigen Elemente (2) mit der Außenfläche des Rohrs (1) zu füllen,
wobei die leitfähigen Elemente (2), die das einzelne Rohr (1) umgeben, alle zusammen als eine Einheit die Form eines Rings haben, um die Position des Rohrs (1) mit kreisförmigem Querschnitt innerhalb dieses Rings sicherzustellen, wobei die gesamte Oberfläche der Außenwand des Rohrs (1) in der gesamten Länge des Hybridkabels an den Außenwänden aller leitfähigen Elemente (2) anliegt, wobei die Wände mit einer Isolierung (22) versehen sind.

2. Verwendung eines Hybridkabels nach Anspruch 1 zur nachträglichen Einlagerung der optischen Faser oder des Kabels in das Rohr und/oder zum nachträglichen Austausch oder Entfernen der optischen Faser oder des Kabels aus dem Hybridkabel.

## Revendications

1. Câble hybride comprenant au moins un élément conducteur (2) sous la forme d'un câble ou d'un conducteur, dans lequel l'élément conducteur (2) est un câble d'alimentation métallique pour le transfert d'énergie électrique pour une tension nominale allant jusqu'à 3,6/6 kV, dans lequel il comprend en outre au moins un tube (1) pour l'installation ultérieure d'une fibre optique ou d'un câble optique, dans lequel le tube (1) ou l'assemblage de deux tubes ou plus (1) est logé au centre du câble hybride à l'intérieur de l'âme du câble (3), l'âme du câble (3) est recouverte d'un élément de revêtement (4) sous forme de ruban ou de mélange extrudé continu et recouverte par la gaine extérieure (5), **caractérisé en ce qu'**au moins un tube (1) fait d'un matériau polymère qui a une section circulaire interne et externe, la section interne du tube polymère (1) comprenant des rainures longitudinales pour réduire la surface de frottement et faciliter le positionnement ou l'enlèvement de la fibre optique ou du câble, chaque tube (1) étant entouré par l'élément conducteur (2) placé dans le câble hybride, de telle sorte que les parois de l'élément conducteur (2) formé par l'isolation (22) et entourant son fil (21) soient en contact avec la surface extérieure du tube (1) ou de l'ensemble de tubes (1) ou de tubes (1), de sorte qu'au moins la moitié de la surface extérieure du tube (1) ou de l'assemblage de tubes (1) soit en contact avec l'élément conducteur (2), la paroi extérieure du tube (1) est pourvue d'au moins une saillie (11) s'étendant longitudinalement pour combler l'espace entre les différents éléments conducteurs (2) au point de contact des éléments conducteurs (2) avec la surface extérieure du tube (1), dans lequel les éléments conducteurs (2) entourant un seul tube (1) ont tous ensemble la forme d'un anneau afin d'assurer la position du tube (1) à section circulaire à l'intérieur de cet anneau, dans lequel la surface entière de la paroi extérieure du tube (1) est en contact sur toute la longueur du câble hybride avec les parois extérieures de tous les éléments conducteurs (2), les parois étant pourvues d'un isolant (22).

2. Utilisation d'un câble hybride selon la revendication 1 pour le stockage ultérieur de la fibre optique ou du câble dans le tube et/ou pour le remplacement ou le retrait ultérieur de la fibre optique ou du câble du câble hybride.
